# EUROPEAN PATENT SPECIFICATION

(11) **EP 2 345 614 B1**
(45) Date of publication and mention of the grant of the patent: **12.06.2013**
(21) Application number: 10163718.9
(22) Date of filing: 24.05.2010
(51) Int. Cl.: B65H 75/24, F16D 41/06, F16D 41/067

(54) **Friction ring for friction shafts, particularly for winding spools**
Reibring für Reibwellen, insbesondere zum Aufwickeln von Spulen
Bague de frottement pour arbres de frottement, en particulier pour enrouler des bobines

(30) Priority: 15.01.2010 IT MI20100038
(43) Date of publication of application: 20.07.2011
(73) Proprietor: I.E.S International Expanding Shafts S.R.L., 20098 S. Giuliano Milanese (IT)
(72) Inventor: Gattrugeri, Stefano, 20141, MILANO (IT); Pettinati, Franco, 20099, SESTO SAN GIOVANNI MI (IT)
(74) Representative: Modiano, Micaela Nadia

(56) References cited:
- WO-A1-2006/089679
- DE-A1- 19 805 211
- DE-U1- 8 909 225
- GB-A- 2 300 460
- US-A1- 2003 116 675
- US-B1- 6 712 308

## Description

The present invention relates to a friction ring for friction shafts, particularly for rewinding spools.

As is known, friction rings are already known which are arranged on friction shafts used to rewind multiple spools, with the possibility to avoid generating differences in traction during the winding of the several spools.

In general, known friction rings are provided by means of an inner ring, which can be arranged on the friction shaft, typically provided with strips that extend parallel to the axis and provide friction coupling by introducing compressed air in chambers provided below such strips.

In order to jointly connect each individual core of the spools to the respective ring or rings, an outer ring is provided from which locking elements protrude which are usually constituted by balls or rollers and are actuated in order to move them in a radial direction directly by the rotation of the shaft.

In practice, the balls or rollers are arranged in guides which are defined on the outer surface of the inner ring and have a variable extension or depth, so that upon rotation of the shaft in a preset direction the balls or rollers are made to protrude radially, in order to perform locking on the inner surface of the core.

With this type of solution, when traction is not applied to the individual spools, inevitably the connection of the core of the spool loosens; therefore undue displacements can occur which can create difficulties during the assembly and disassembly of the spools on the rings.

GB 2 300 460 A discloses a frictional winding core locking device having a rotatable base ring frictionally engaged through lubricated pads and inflatable ducts by a drive shaft, and a pressure ring supporting a plurality of ball bearings acted on by ramp surfaces, whereby a reel core may be axially loaded on the pressure ring with the ball bearings providing low friction to allow sliding movement of the core after which the balls lock the core to the pressure ring on relative rotation of the rings causing the ramps to force the balls outward against the core. An additional pressure device for the balls may be provided in the form of steel spring plates arranged in the ramps upon which the balls run.

The aim of the invention is to solve the problem mentioned above by providing a friction ring for friction shafts, particularly for rewinding spools, which allows to maintain always a stable connection between the core of the spool and the respective ring even if the tension on the spool ceases.

Within this aim, an object of the invention is to provide a friction ring in which is possible to have particularly fast assembly without having to resort to the use of particular tools or complex solutions.

Another object of the present invention is to provide a friction ring which, thanks to its particular constructive characteristics, is capable of giving the greatest assurances of reliability and safety in use.

Another object of the present invention is to provide a friction ring for friction shafts particularly for rewinding spools, that can be obtained easily starting from commonly commercially available elements and materials and is also competitive from a merely economical standpoint.

In accordance with the invention, there is provided a friction ring for friction shafts, particularly for rewinding spools, as defined in the appended claims.

Further characteristics and advantages of the present invention will become better apparent from the description of a preferred but not exclusive embodiment of a friction ring for friction shafts, particularly for rewinding spools, illustrated by way of non-limiting example in the accompanying drawings, wherein:

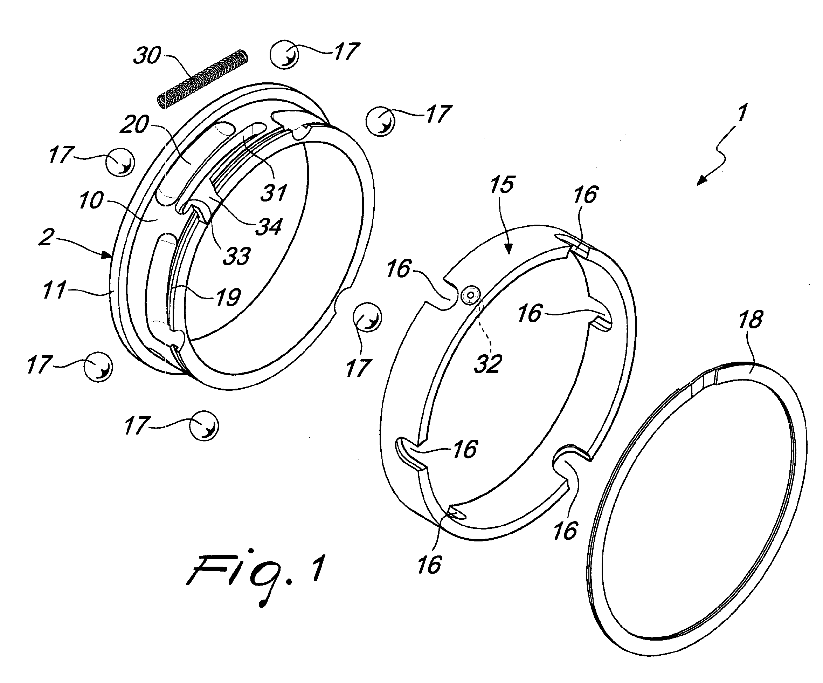

Figure 1 is a schematic exploded perspective view of the friction ring, according to the invention;

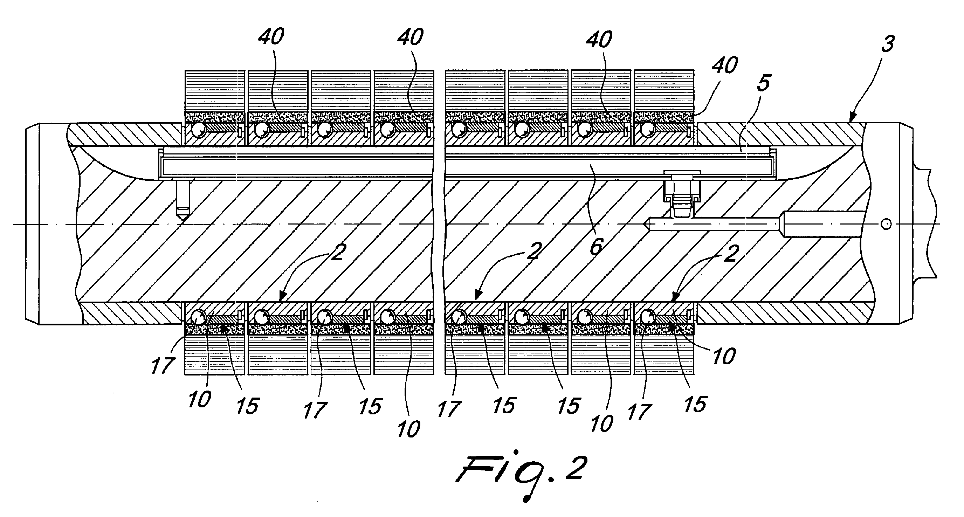

Figure 2 is a sectional view, taken along an axial plane, of a shaft to which a plurality of rings according to the invention has been applied;

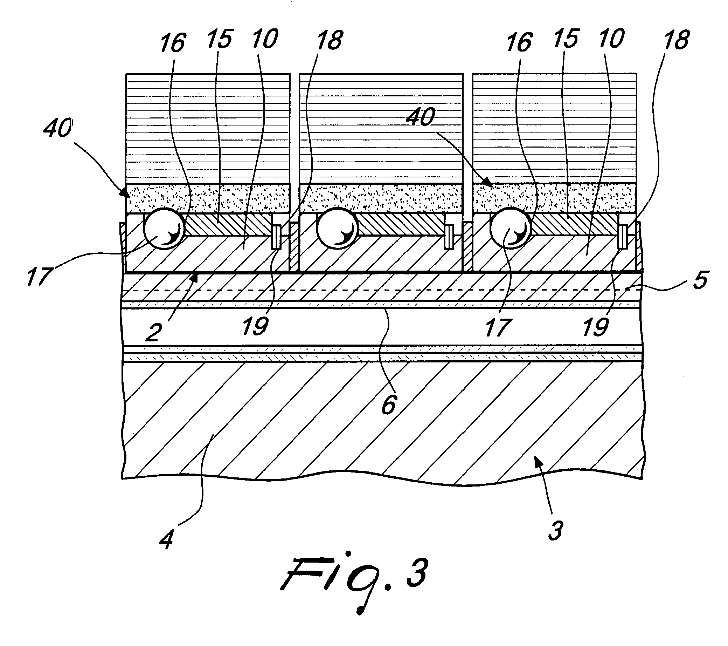

Figure 3 is an enlarged-scale view of a detail of the cross-section in Figure 2;

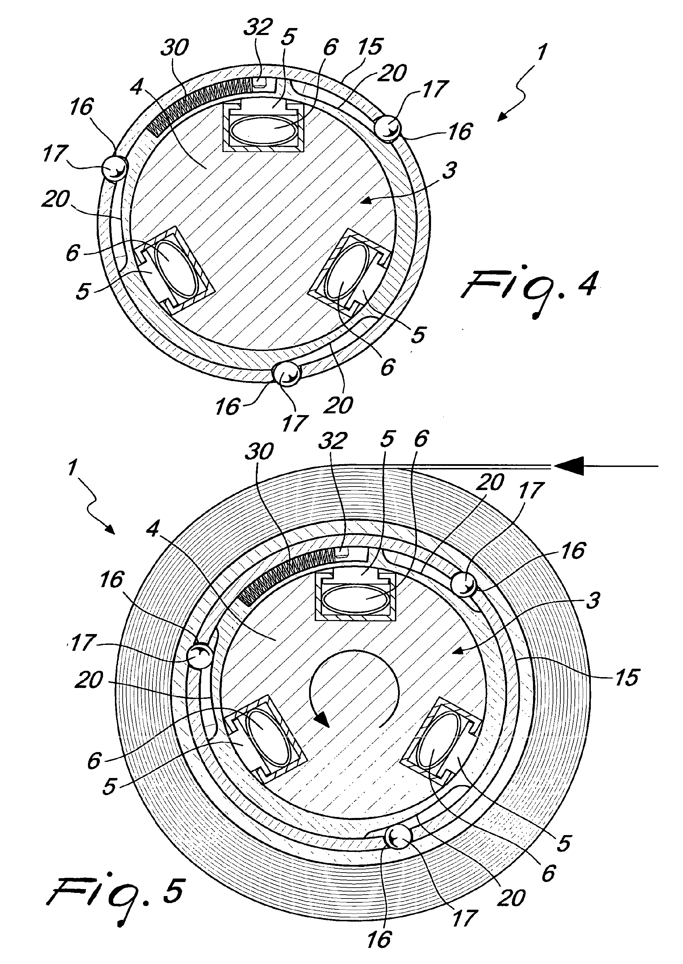

Figure 4 is a sectional view of the friction ring according to the invention, applied to a friction shaft, before connection to the inside of the core of a spool;
Figure 5 is a sectional view, taken along a plane that is perpendicular to the axis of the friction shaft, of the friction ring according to the invention;
Figures 6, 7, 8 and 9 are perspective views in succession of the steps for inserting the elastic means that act between the inner ring and the outer ring;
Figure 10 is a perspective view of the friction ring with the retention ring applied in order to make the connection between the inner ring and the outer ring stable;
Figure 11 is an exploded perspective view of a friction ring with facilitated spring insertion means;
Figure 12 is a view of the friction ring of Figure 11, with the outer ring in position;
Figure 13 is an exploded perspective view of a friction ring with the ramp for arranging the balls placed proximate to the flange;
Figure 14 is a perspective view of the ring of Figure 13, with the spring introduced in the positioning seat;
Figure 15 is a perspective view of the initial step of connection of the outer ring;
Figure 16 is a view of the outer ring in position, with the locking spiral ring shown in exploded view;
Figure 17 is an enlarged-scale view of the detail of the receptacle and of the correct arrangement for the ball;
Figure 18 is an exploded perspective view of a bidirectional friction ring;
Figure 19 is an exploded perspective view of the arrangement of the springs;
Figure 20 is an exploded perspective view of the friction ring with the outer ring applied to it.

With reference to the figures, the friction ring for friction shafts, particularly for winding spools, according to the invention, generally designated by the reference numeral 1, comprises an inner ring 2 that can be arranged on a friction shaft, generally designated by the reference numeral 3 and typically provided by means of a shaft body 4, that is provided peripherally with a plurality of strips 5 that extend parallel to the axis and can expand radially by way of the action of expansion chambers 6 that can be connected to a compressed air supply circuit.

The strips 5 are made to expand with a pressure value that is variable according to the torque that one wishes to impose to the individual cores being rewound, so that the spools can uniform automatically to different traction conditions during winding.

The inner ring 2 has a central body 10 that is provided, at one end, with a flange 11, which can be mated with an outer ring 15 provided with uniformly arranged openings 16 for the exit of locking elements constituted by balls 17 or, optionally, by rollers.

The balls are activated to move them in a radial direction by the rotation between the inner ring and the outer ring.

The outer ring is held in position by means of a locking spiral ring 18 inserted in a groove 19, which is defined correspondently on the central body 10.

On the central body 10 there are activation means provided by means of a plurality of slots 20 that have a ramp-like bottom, so that mutual rotation between the outer ring 15 and the inner ring 2 produces an action on the balls 17 in a radial direction.

The peculiarity of the invention consists in that elastic means are provided which are constituted by a compression spring 30, which acts between the outer ring 15 and the inner ring 2 in order to push the balls 17 radially outward.

In particular, the spring 30 is accommodated in a spring seat 31, which is recessed in the body 10, and has an end that acts against an abutment pin 32, provided on the outer ring 15, and the other end that mates with the abutment end 33 of the seat 31.

Another peculiarity of the invention consists in that there is an insertion portion 34, which connects the spring seat 31 to the outside, leading out at the axial end of the body 10.

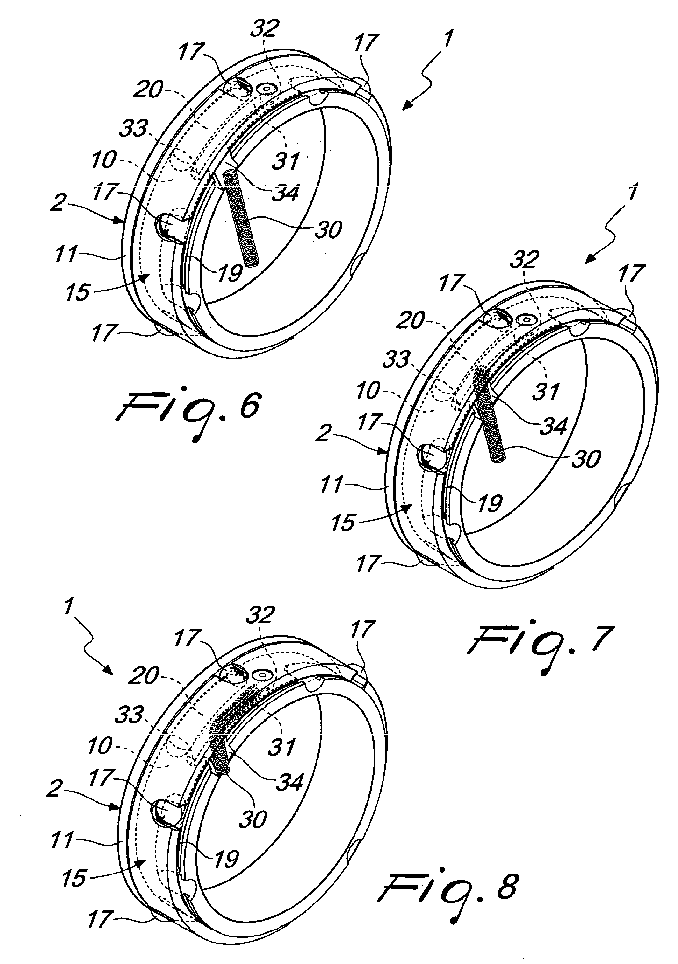

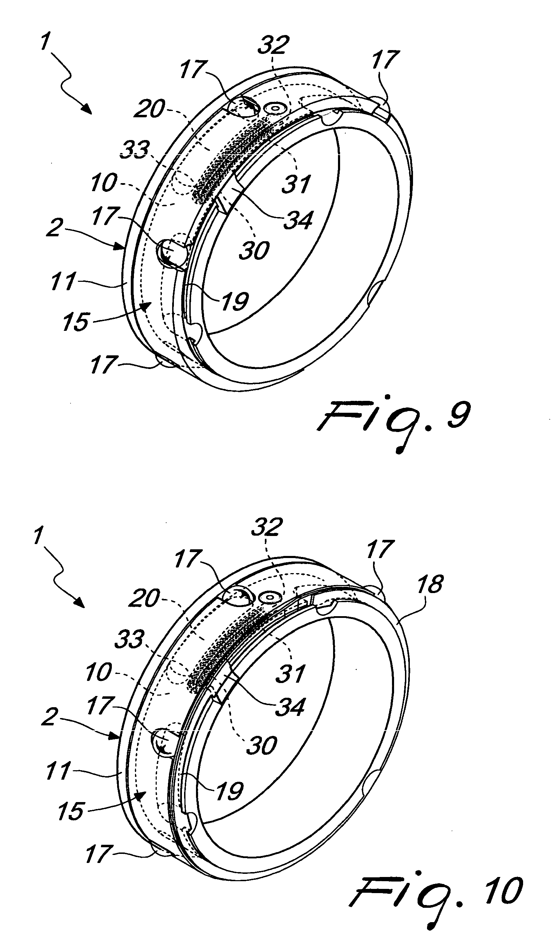

The insertion portion 34, as clearly shown in Figures 6 to 9, allows to insert the spring once the balls 17 have been inserted simply by arranging the abutment pin 32 at the opposite end with respect to the abutment end 33 and by then inserting the compression spring, making the spring pass completely beyond the insertion portion 34 and allowing its expansion so that the spring is arranged against the abutment end 33, thereby the spring is in position.

Once the spring has been positioned, it applies an elastic thrust between the inner ring and the outer ring, which keeps the balls 17 in the extracted position even in the absence of traction or of forces applied to the spool 40, which has, for example, been already wound completely.

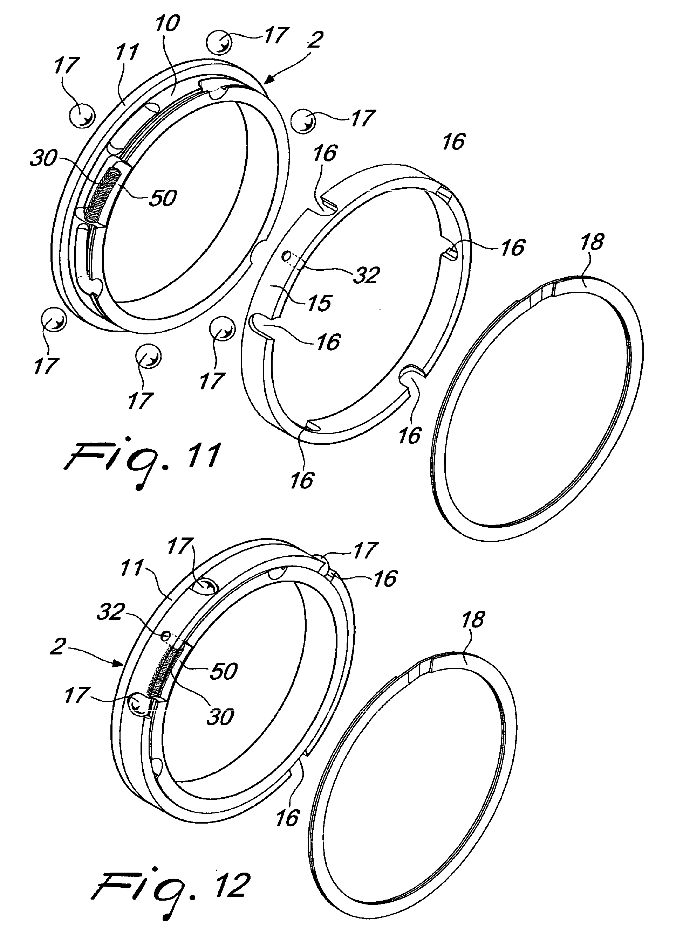

According to what is shown in Figures 11 and 12, a friction ring is described which has simplified means for correct positioning of the spring 30.

In this embodiment, in which the same components are designated by the reference numerals used previously, there is a hollow 50 that is open in an axial direction on the end of the body 10 that lies opposite the one that defines the flange 11.

The spring, again designated by the reference numeral 30, can be inserted in the hollow 50 by using the opening in the axial direction of the hollow proper.

Once the spring 30 has been inserted, the outer ring 15, which is provided with the abutment pin 32 that acts on the end of the spring 30, is positioned.

The outer ring 15 is kept in position by means of the locking spiral ring 18, which is inserted in the seat 19 provided in the central body.

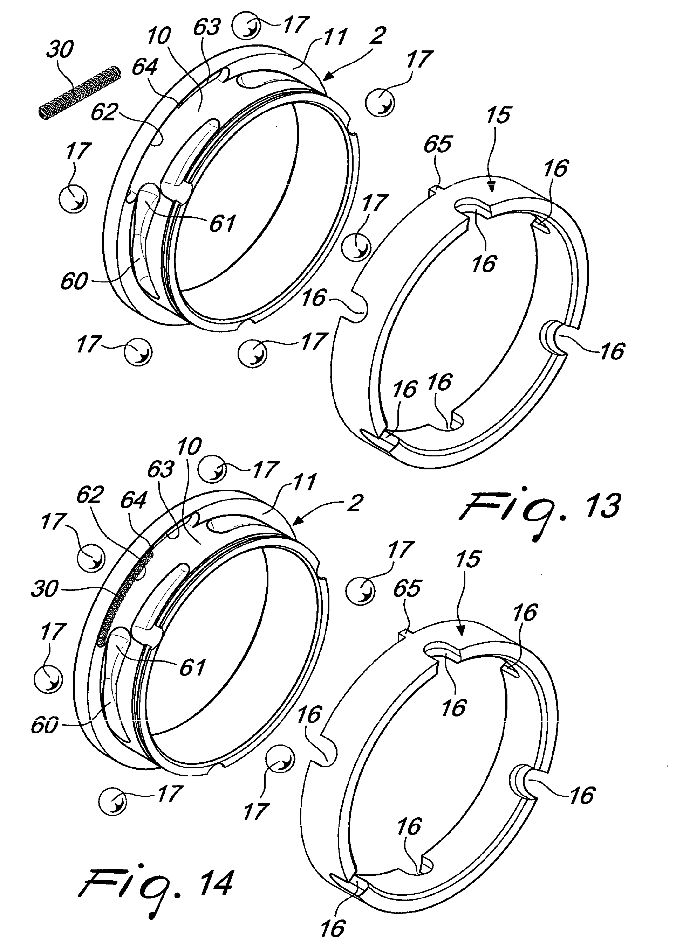

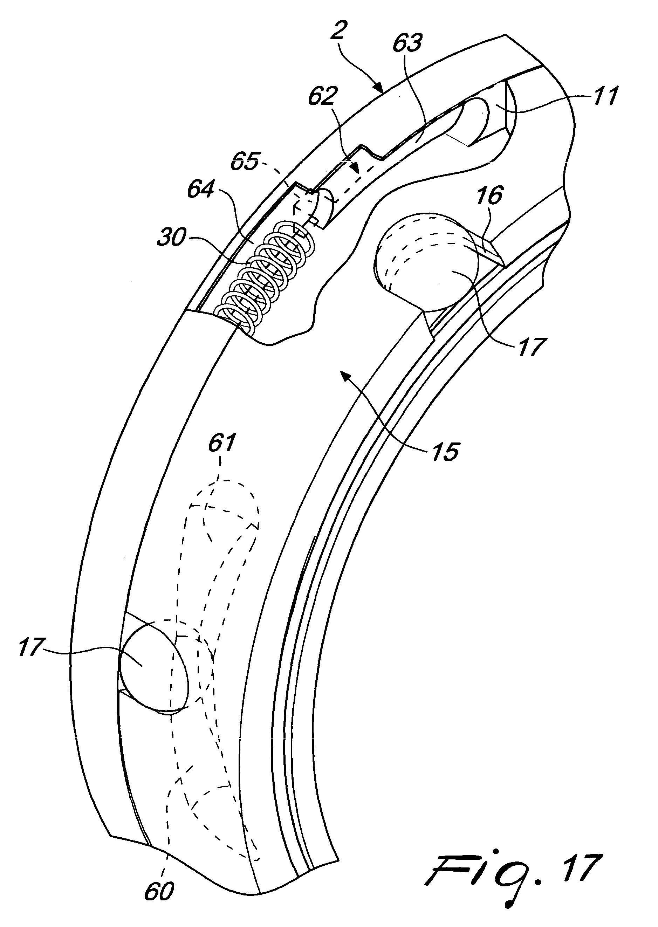

According to what is shown in Figures 13 to 17, a friction ring is illustrated in which there is a ramp for positioning the balls arranged proximate to the flange 11.

In this embodiment, on the portion of the central body 10 proximate to the flange 11 there are slots which have an active ramp 60 arranged opposite a positioning ramp 61 in which it is possible to insert beforehand a ball 17; the apex of the slot is provided between the ramps 60 and 61.

The friction ring, in this embodiment, defines, in the flange 11, a receptacle for the spring, designated by the reference numeral 62, which has a raised initial portion 63 and a depressed final portion 64, in which the compression spring, again designated by the reference numeral 30, is inserted.

The seat, which is provided on the face of the flange 11 that is directed toward the central body, allows to insert an axial pin 65 defined by the outer ring, again designated by the reference numeral 15.

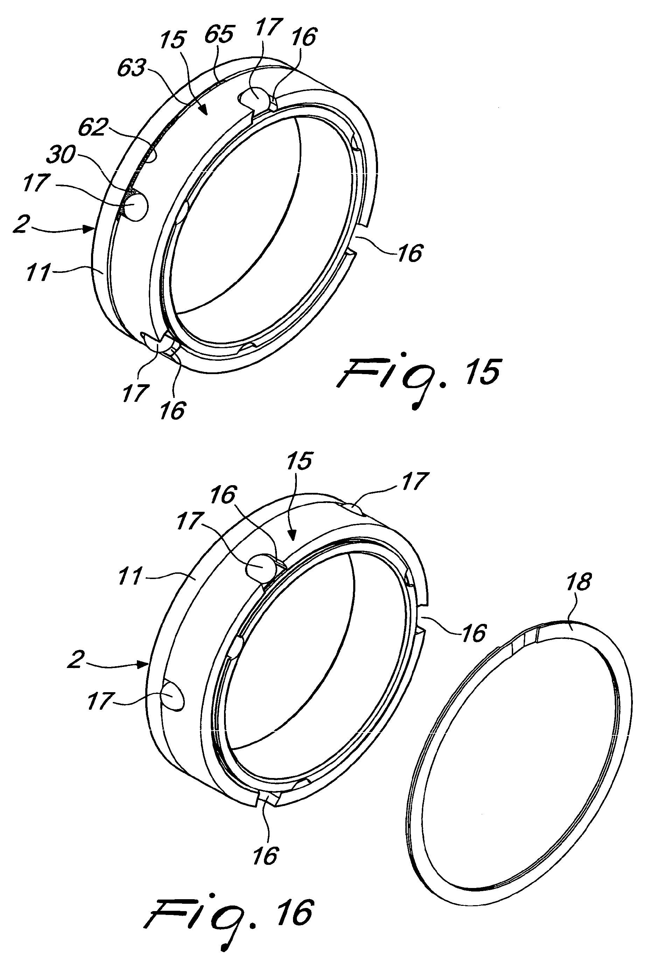

With this embodiment, as shown in Figure 15, the balls 17 are arranged beforehand in the openings 16 and the axial pin 65 is arranged at the raised portion 63, as shown clearly in Figure 15.

A partial rotation is performed which makes the ball 17 pass beyond the apex between the active ramp 60 and the positioning ramp 61 and enter toward the active ramp 60.

At the same time, the axial pin 65 arrives at the depressed portion 64, allowing an axial end approach between the flange 11 and the ring 15, so that the possibility of movement of the pin 65 is limited to the depressed portion, thus preventing the ball 17 from returning, during the normal steps of use, into the positioning ramp 61.

In this case, therefore, the spring 30 is accommodated directly on the flange, consequently simplifying the installation operations.

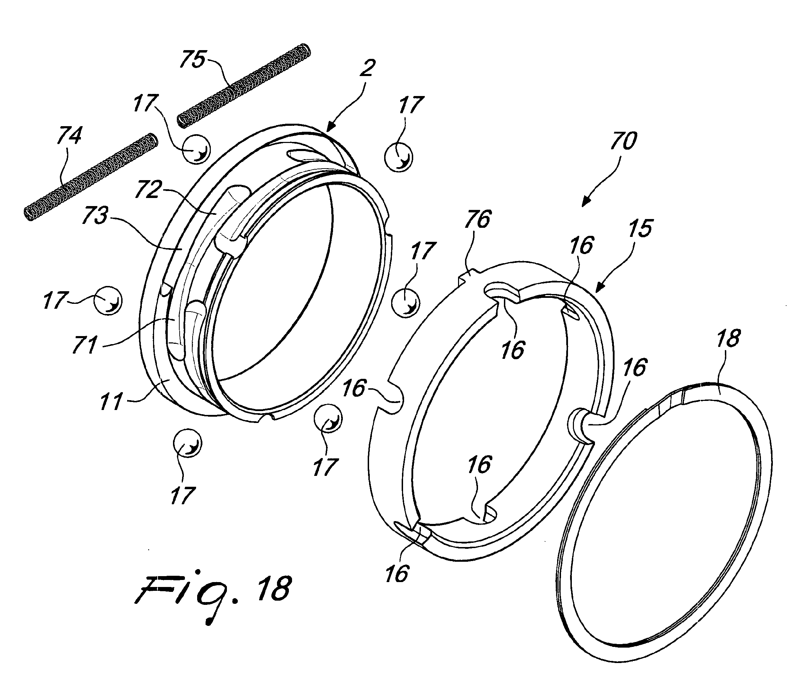

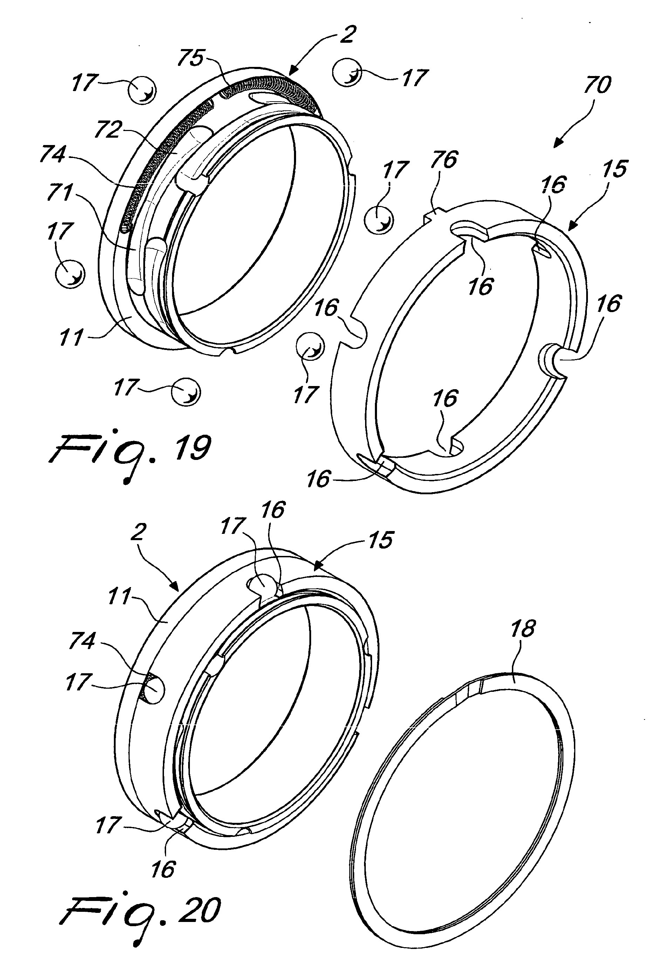

With reference to Figures 18 to 20, a bidirectional friction ring, generally designated by the reference numeral 70, is shown in which the slots have a first ramp 71 and a second ramp 72, which are oppositely oriented one another and have a central apex.

In order to keep the balls 17 in the extracted position, on the flange 11 there is a bidirectional seat 73 in which a first spring 74 and a second spring 75 are inserted so as to be mutually opposite; a bidirectional pin 76 can be arranged between said springs, is associated with the outer ring 15 and allows, by way of the counter-rotation of the ring, to perform, in the initial step of application of the core, the insertion of the ball 17 in one slot or in the other, with the possibility to use the friction ring in both directions, utilizing the engagement of the ball with the core of the spool that is applied, said engagement remaining constant by way of the presence of the core.

In this case also, the insertion step of the springs is extremely simple, because the mutually opposite springs 74 and 75 can be inserted frontally in the bidirectional seat 73 and are then kept in position by the ring 15, which in turn is retained by the spiral ring 18.

In all of the embodiments shown, in order to disengage the cores from the spools 40 it is sufficient to apply a slight counter-rotation of the shaft which, by turning the inner ring with respect to the outer ring, applies compression to the spring and, accordingly, at least a partial retraction of the balls, so that it is possible to extract the cores from the respective rings.

With the described arrangement, a friction ring is thus available which is particularly practical and functional, because in inactive conditions grip is always applied to the core of the spool connected to the friction ring, preventing undue movements.

Moreover, the presence of the compression spring causes all the friction rings to arrange themselves in the same position when no traction is applied to them.

The invention thus conceived is susceptible of numerous modifications and variations, all of which are within the scope of the appended claims.

All the details may further be replaced with other technically equivalent elements.

In practice, the materials used, so long as they are compatible with the specific use, as well as the contingent shapes and dimensions, may be any according to requirements.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A friction ring (1) for friction shafts, particularly for winding spools, comprising an inner ring (2), which can be arranged on a friction shaft (3) and is associated with an outer ring (15), from which means (17) protrude for detachably locking the core of a spool (40) that can be mated to said friction shaft (3), means being further provided for activating said locking means (17) by mutual rotation between said inner ring (2) and said outer ring (15), **characterized in that** it comprises at least one compression spring (30; 62; 74, 75) which acts between said inner ring (2) and said outer ring (15) to apply an elastic thrust between the inner ring (2) and the outer ring (15) to push said locking means (17) radially outward.

2. The friction ring according to claim 1, **characterized in that** it comprises, on said inner ring (2), a spring seat (31), said spring seat (31) being able to accommodate an abutment pin (32) which is associated with said outer ring (15), said compression spring (30) acting between said abutment pin (32) and one end of said seat (33).

3. The friction ring according to claim 2, **characterized in that** it comprises, on said inner ring (2), an insertion portion (34) for the connection of said spring seat (31) to the outside, said insertion portion (34) leading at the axial end of said body (10) of said inner ring (2).

4. The friction ring according to claim 3, **characterized in that** said insertion portion (34) leads into said spring seat (31) proximate to, but spaced from, the abutment end (33) of said spring seat (31) where said compression spring (30) acts.

5. The friction ring according to claim 1, **characterized in that** it comprises, on the central body (10) of said inner ring (2), a hollow (50) which is open in an axial direction on the end of said central body (10) that is opposite to the one that defines a flange (11), in order to accommodate said compression spring (30), there being also locking spiral ring (18) in order to retain said outer ring (15) in position.

6. The friction ring according to claim 1, **characterized in that** it comprises, on said central body (10), a positioning ramp (61) arranged on the continuation of an active ramp (60), in order to accommodate, during assembly, said locking means (17), on the flange (11) of said central body (10) there being a receptacle for the spring (62) that has a raised initial portion (63) and a depressed final portion (64), in said depressed final portion (64) there being said compression spring (30), said outer ring (15) having an axial pin (65) that can engage the end of said compression spring (30) in order to push said locking means (17) radially outward.

7. The friction ring according to claim 6, **characterized in that** said axial pin (65) is adapted to abut against the end of said depressed portion (64), on the side of said raised portion (63), in order to act as a rotation locking element and prevent, once said friction ring has been assembled, the passage of said locking means (17) in said positioning ramp (61).

8. The friction ring according to claim 1, **characterized in that** it comprises, on said inner ring (2), slots that form a first ramp (71) and a second ramp (72) which are arranged mutually opposite, with the apex arranged between them, on the flange (11) of said inner ring (2) there being a bidirectional seat (73) that accommodates a first spring (74) and a second spring (75), which are mutually opposite, a bidirectional pin (76) connected to said outer ring (15) being arrangeable between said springs (74, 75).

## Patentansprüche

1. Reibring (1) für Reibwellen, insbesondere für Wickelspulen, enthaltend einen inneren Ring (2), der auf einer Reibwelle (3) angeordnet werden kann und der einem äußeren Ring (15) zugeordnet ist, von welchem Mittel (17) hervorragen zum lösbaren Arretieren des Kerns einer Spule (40), die an der Reibwelle (3) angebracht werden kann, wobei ferner Mittel vorgesehen sind zum Aktivieren der Arretiermittel (17) durch gegenseitige Drehung zwischen dem inneren Ring (2) und dem äußeren Ring (15), **dadurch gekennzeichnet, dass** er wenigstens eine Kompressionsfeder (30; 62; 74, 75) enthält, die zwischen dem inneren Ring (2) und dem äußeren Ring (15) wirkt, um einen elastischen Druck zwischen dem inneren Ring (2) und dem äußeren Ring (15) auszuüben, so dass das Arretiermittel (17) radial nach außen gedrückt wird.

2. Reibring nach Anspruch 1, **dadurch gekennzeichnet, dass** er am inneren Ring (2) einen Federsitz (31) enthält, wobei der Federsitz (31) in der Lage ist, einen Widerlagerstift (32) aufzunehmen, der dem äußeren Ring (15) zugeordnet ist, wobei der Kompressionsring (30) zwischen dem Widerlagerstift (32) und einem Ende des Sitzes (33) wirkt.

3. Reibring nach Anspruch 2, **dadurch gekennzeichnet, dass** er am inneren Ring (2) einen Einsteckteil (34) für die Verbindung des Federsitzes (31) an die Außenseite enthält, wobei der Einsteckteil (34) am axialen Ende des Körpers (10) des inneren Rings (2) ausläuft.

4. Reibring nach Anspruch 3, **dadurch gekennzeichnet, dass** der Einsteckteil (34) nahe dem Widerlagerende (33) des Federsitzes (31), wo die Kompressionsfeder (30) wirkt, aber davon beabstandet, in den Federsitz (31) hinein verläuft.

5. Reibring nach Anspruch 1, **dadurch gekennzeichnet, dass** er am zentralen Körper (10) des inneren Rings (2) eine Aushöhlung (50) enthält, die in einer axialen Richtung am Ende des zentralen Körpers (10), das gegenüber demjenigen, das einen Flansch (11) definiert, geöffnet ist, um die Kompressionsfeder (30) aufzunehmen, wobei zudem ein arretierender Spiralring (18) vorhanden ist, um den äußeren Ring (15) in Position zu halten.

6. Reibring nach Anspruch 1, **dadurch gekennzeichnet, dass** er am zentralen Körper (10) eine Positionierungsrampe (61) enthält, die an der Fortsetzung einer aktiven Rampe (60) angeordnet ist, um während des Zusammenbaus das Arretiermittel (17) unterzubringen, wobei am Flansch (11) des zentralen Körpers (10) eine Aufnahme für die Feder (62) vorgesehen ist, die einen erhabenen Anfangsteilbereich (63) und einen versenkten Endteilbereich (64) aufweist, wobei sich in dem versenkten Endteilbereich (64) die Kompressionsfeder (30) befindet, wobei der äußere Ring (15) einen axialen Stift (65) aufweist, der mit dem Ende der Kompressionsfeder (30) in Eingriff kommen kann, um das Arretiermittel (17) radial nach außen zu drücken.

7. Reibring nach Anspruch 6, **dadurch gekennzeichnet, dass** der axiale Stift (65) dazu vorgesehen ist, am Ende des versenkten Teilbereichs (64), auf Seite des erhabenen Teilbereichs (63), anzuliegen, um als Drehung blockierendes Element zu wirken und, sobald der Reibring zusammengebaut ist, die Passage des Arretiermittels (17) in die Positionierungsrampe (61) zu verhindern.

8. Reibring nach Anspruch 1, **dadurch gekennzeichnet, dass** er am inneren Ring (2) Schlitze enthält, die eine erste Rampe (71) und eine zweite Rampe (72) bilden, welche einander gegenüber angeordnet sind, mit dem Scheitel zwischen ihnen angeordnet, wobei sich am Flansch (11) des inneren Rings (2) ein bidirektionaler Sitz (73) befindet, der eine erste Feder (74) und eine zweite Feder (75) aufnimmt, die einander gegenüberliegen, wobei sich ein mit dem äußeren Ring (15) verbundener bidirektionaler Stift (76) zwischen den Federn (74, 75) anordnen lässt.

## Revendications

1. Bague de friction (1) pour arbres de friction, en particulier pour bobines d'enroulement, comprenant une bague interne (2), qui peut être aménagée sur un arbre de friction (3) et est associée à une bague externe (15), de laquelle font saillie des moyens (17) pour verrouiller de manière détachable le noyau d'une bobine (40) qui peut être couplé audit arbre de friction (3), des moyens étant par ailleurs prévus pour activer lesdits moyens de verrouillage (17) par rotation mutuelle entre ladite bague interne (2) et ladite bague externe (15), **caractérisée en ce qu'**elle comprend au moins un ressort de compression (30 ; 62 ; 74, 75) qui agit entre ladite bague interne (2) et ladite bague externe (15) pour appliquer une poussée élastique entre la bague interne (2) et la bague externe (15) afin de pousser lesdits moyens de verrouillage (17) radialement vers l'extérieur.

2. Bague de friction selon la revendication 1, **caractérisée en ce qu'**elle comprend, sur ladite bague interne (2), un siège de ressort (31), ledit siège de ressort (31) étant à même de recevoir une goupille de butée (32) qui est associée à ladite bague externe (15), ledit ressort de compression (30) agissant entre ladite goupille de butée (32) et une extrémité dudit siège (33).

3. Bague de friction selon la revendication 2, **caractérisée en ce qu'**elle comprend, sur ladite bague interne (2), une portion d'insertion (34) pour raccorder ledit siège de ressort (31) à l'extérieur, ladite portion d'insertion (34) menant à l'extrémité axiale dudit corps (10) de ladite bague interne (2).

4. Bague de friction selon la revendication 3, **caractérisée en ce que** ladite portion d'insertion (34) mène dans ledit siège de ressort (31) proche, mais espacée de l'extrémité de butée (33) dudit siège de ressort (31), où ledit ressort de compression (30) agit.

5. Bague de friction selon la revendication 1, **caractérisée en ce qu'**elle comprend, sur le corps central (10) de ladite bague interne (2), un creux (50) qui est ouvert dans la direction axiale sur l'extrémité dudit corps central (10) qui est opposée à celle qui définit une bride (11) pour recevoir ledit ressort de compression (30), un ressort spiral de verrouillage (18) étant également présent pour retenir ladite bague externe (15) en place.

6. Bague de friction selon la revendication 1, **caractérisée en ce qu'**elle comprend, sur ledit corps central (10), une rampe de positionnement (61) aménagée sur le prolongement d'une rampe active (60) afin de recevoir, au cours de l'assemblage, lesdits moyens de verrouillage (17), sur la bride (11) dudit corps central (10) où se trouve un réceptacle pour le ressort (62), qui a une portion initiale dressée (63) et une portion finale renfoncée (64), où ladite portion finale renfoncée (64) reçoit ledit ressort de compression (30), ladite bague externe (15) ayant une goupille axiale (65) qui peut s'engager sur l'extrémité dudit ressort de compression (30) afin de pousser lesdits moyens de verrouillage (17) radialement vers l'extérieur.

7. Bague de friction selon la revendication 6, **caractérisée en ce que** ladite goupille axiale (65) est à même de buter contre l'extrémité de ladite portion renfoncée (64), sur le côté de ladite portion dressée (63), afin d'agir comme élément de verrouillage de rotation et empêcher, une fois que ladite bague de friction a été assemblée, le passage desdits moyens de verrouillage (17) dans ladite rampe de positionnement (61).

8. Bague de friction selon la revendication 1, **caractérisée en ce qu'**elle comprend, sur ladite bague interne (2), des fentes qui forment une première rampe (71) et une seconde rampe (72) qui sont ménagées mutuellement en regard, le sommet étant aménagé entre elles, sur la bride (11) de ladite bague interne (2) où il y a un siège bidirectionnel (73) qui reçoit un premier ressort (74) et un second ressort (75), qui sont mutuellement en regard, une goupille bidirectionnelle (76) raccordée à ladite bague externe (15) pouvant être aménagée entre lesdits ressorts (74, 75).
